# EUROPEAN PATENT APPLICATION

(11) **EP 4 393 758 A1**
(43) Date of publication of application: **03.07.2024**
(21) Application number: 22897153.7
(22) Date of filing: 01.07.2022
(51) Int. Cl.: B60L 53/14, B60L 53/51, B60L 53/53, H02J 7/00, H02J 7/02, H02J 7/34, H02J 7/35

(54) **CHARGING MODULE AND CHARGING SYSTEM**

(30) Priority: 25.11.2021 CN 202111417488
(71) Applicant: Huawei Digital Power Technologies Co., Ltd., Shenzhen, Guangdong 518043 (CN)
(72) Inventor: PAN, Denghai, Shenzhen, Guangdong 518043 (CN); LV, Zejie, Shenzhen, Guangdong 518043 (CN); YI, Liqiong, Shenzhen, Guangdong 518043 (CN)
(74) Representative: Gill Jennings & Every LLP
(86) International application number: PCT/CN2022/103278
(87) International publication number: WO 2023/093057

(57) **Abstract**

Embodiments of this application disclose a charging module, applied to the vehicle field. The charging module includes an AC-DC circuit, a first DC-DC circuit, and a first direct current transmission circuit. A first end of the AC-DC circuit is connected to an alternating current grid, a second end is connected to a first end of the first DC-DC circuit through a high-voltage direct current bus, and a second end of the first DC-DC circuit is connected to a to-be-charged apparatus. A second end of the first direct current transmission circuit is configured to connect to an external direct current apparatus. The AC-DC circuit is configured to convert, into a first direct current, an alternating current provided by the alternating current grid. The first DC-DC circuit is configured to: convert a high-voltage direct current on the high-voltage direct current bus into a second direct current, and transmit the second direct current to the to-be-charged apparatus. The direct current transmission module is configured to transmit a direct current between the high-voltage direct current bus and the external direct current apparatus.

## Description

This application claims priority to Chinese Patent Application No. CN202111417488.4, filed with the China National Intellectual Property Administration on November 25, 2021 and entitled "CHARGING MODULE AND CHARGING SYSTEM", which is incorporated herein by reference in its entirety.

### TECHNICAL FIELD

Embodiments of this application relate to the vehicle field, and in particular, to a charging module and a charging system.

### BACKGROUND

A charging station is an important infrastructure for an electric vehicle to supplement electric energy. A charging system of the charging station usually integrates functions such as power distribution for alternating current input, power distribution for a direct current, cooling, security protection, and detection and metering. The electric vehicle is connected to an alternating current grid by using the charging system, to supplement the electric energy. A charging module in the charging system may convert, into a direct current voltage in a specific range for output, a three-phase alternating current provided by the alternating current grid, and then the direct current voltage is connected to a battery of the electric vehicle by using a charging gun of the system, to implement charging and energy supplementation.

An existing charging system first inputs the three-phase alternating current to a rectifier module, and the rectifier module converts the three-phase alternating current into a high-voltage direct current and transmits the high-voltage direct current to a high-voltage direct current bus. Then, a plurality of power conversion modules are connected to the high-voltage direct current bus. The power conversion module converts the high-voltage direct current into a direct current that meets a charging requirement of the electric vehicle. The electric vehicle is connected to the power conversion module, to complete a charging process.

In the foregoing charging system, the rectifier module and each power conversion module are independent modules. Therefore, there is another component used for connection between output of the rectifier module and input of the power conversion module. Such a split charging system severely affects electric energy conversion efficiency, and the component between the two modules also increases system costs, and aggravates a heat problem of the charging system.

### SUMMARY

Embodiments of this application provide a charging module and a charging system. An integral charging module is designed to improve electric energy conversion efficiency. In addition, when an electric vehicle is being charged, battery energy storage and photovoltaic power generation can be superimposed, thereby improving a charging speed of the electric vehicle.

A first aspect of embodiments of this application provides a charging module.

The charging module is a three-port integral charging module, and the charging module includes an AC-DC circuit, a first DC-DC circuit, and a first direct current transmission circuit. One port of the charging module is one end of the AC-DC circuit, and is configured to connect to an alternating current grid. The other end of the AC-DC circuit is connected to one end of the first DC-DC circuit through a high-voltage direct current bus. The other end of the first DC-DC circuit is an output end of the charging module, and is configured to connect to a to-be-charged apparatus. One end of the first direct current transmission circuit is connected to the high-voltage direct current bus, and the other end is a 3^{rd} port of the charging module, and is configured to connect to an external direct current apparatus, for example, a direct current apparatus such as a photovoltaic power generation apparatus or an energy storage apparatus.

When the charging module is charging, the AC-DC circuit converts, into a first direct current, an alternating current provided by the alternating current grid, and transmits the first direct current to the high-voltage direct current bus. If a slow charging mode is used in this case, the high-voltage direct current bus transmits the first direct current to the first DC-DC circuit, and the first DC-DC circuit converts the first direct current into a second direct current corresponding to the to-be-charged apparatus, and then provides the second direct current for the to-be-charged apparatus. However, if the slow charging mode is used, the first direct current transmission circuit also needs to transmit, to the high-voltage direct current bus, a direct current sent by the photovoltaic power generation apparatus or the energy storage apparatus. In this case, the first direct current output by the AC-DC circuit and the direct current sent by the photovoltaic power generation apparatus or the energy storage apparatus are superimposed on the high-voltage direct current bus, and input of the first DC-DC circuit increases, to increase the second direct current and implement fast charging of the to-be-charged apparatus. In addition, in a gap in which the to-be-charged apparatus is not charged, the high-voltage direct current bus may further transmit the first direct current to the first direct current transmission circuit, and charge the energy storage apparatus by using the first direct current transmission circuit, to store electric energy.

Compared with a split charging module, the integral charging module may omit a connection component between the AC-DC circuit and the first DC-DC circuit, and further eliminate power consumption generated by the connection component while reducing module costs. This greatly improves electric energy conversion efficiency and reduces heat generated by the charging module. In addition, the three-port charging module provides a connection port for the external direct current apparatus, to implement superimposition power generation of the external direct current apparatus and the alternating current grid, and further mitigate impact of the fast charging mode on the alternating current grid while improving the charging speed. In addition, new energy may be fully used to reduce carbon emissions.

In an optional implementation, the external direct current apparatus connected to the first direct current transmission circuit may be a photovoltaic power generation apparatus. In a normal charging scenario, the first direct current transmission circuit may be turned off, provided that the alternating current grid provides charging electric energy for the first DC-DC circuit. However, in a fast charging scenario, the direct current transmission circuit needs to be turned on, to obtain a direct current provided by the photovoltaic power generation apparatus, transmit, to the high-voltage direct current bus, the direct current provided by the photovoltaic power generation apparatus, and implement electric energy superimposition, so that the second direct current for charging the to-be-charged apparatus is increased, and fast charging of the to-be-charged apparatus is implemented.

In an optional implementation, the external direct current apparatus connected to the first direct current transmission circuit may be an energy storage apparatus. When the first direct current transmission circuit is connected to the energy storage apparatus, a working direction of the first direct current transmission circuit is bidirectional. When the charging module does not charge the to-be-charged apparatus, the first direct current transmission circuit may obtain the first direct current on the high-voltage direct current bus, and charge the energy storage apparatus by using the first direct current, to store energy. However, in a fast charging scenario, a transmission direction of the direct current transmission circuit needs to be changed, to obtain a direct current provided by the energy storage apparatus, transmit the direct current to the high-voltage direct current bus, and implement electric energy superimposition, so that the second direct current for charging the to-be-charged apparatus is increased, and fast charging of the to-be-charged apparatus is implemented.

In an optional implementation, the external direct current apparatus connected to the first direct current transmission circuit may be an auxiliary charging module. Compared with the charging module, the auxiliary charging module does not have an AC-DC circuit. The auxiliary charging module is a two-port module, and includes a second DC-DC circuit and a second direct current transmission circuit. A first end of the second DC-DC circuit is connected to a first end of the second direct current transmission circuit, and a second end of the second DC-DC circuit is connected to the to-be-charged apparatus, to provide a charging port for the to-be-charged apparatus. The charging module is connected to the auxiliary charging module by using the first direct current transmission circuit and the second direct current transmission circuit. When the charging module is connected to the to-be-charged module, the first direct current transmission circuit needs to transmit the first direct current on the high-voltage direct current bus to the second direct current transmission circuit, and then the second direct current transmission circuit transmits the first direct current to the second DC-DC circuit. The second DC-DC circuit converts the first direct current into the second direct current, and transmits the second direct current to the to-be-charged apparatus by using the second end of the second DC-DC circuit, to complete a charging process.

In the foregoing implementation, the second DC-DC circuit in the auxiliary charging module and the first DC-DC circuit in the charging module may share the AC-DC circuit of the charging module. Therefore, connecting the auxiliary charging module to the charging module may increase a quantity of charging ports, to simultaneously charging a plurality of to-be-charged apparatuses. In addition, a quantity of AC-DC circuits may be reduced while the quantity of charging ports is increased, thereby reducing module costs.

In an optional implementation, the second direct current transmission circuit in the auxiliary charging module may alternatively be connected to the photovoltaic power generation apparatus or the energy storage apparatus. The second direct current transmission circuit may further transmit, to the second DC-DC circuit, the direct current provided by the photovoltaic power generation apparatus or the energy storage apparatus, to complete direct current conversion, and finally charge the to-be-charged apparatus.

In an optional implementation, the first direct current transmission circuit may determine a working status of the first direct current transmission circuit based on a value of the first direct current on the high-voltage direct current bus. If the value of the first direct current on the high-voltage direct current bus is greater than a preset threshold, it indicates that electric energy provided by the alternating current grid is sufficient. In this case, the first direct current transmission circuit charges the to-be-charged apparatus, and transmits the first direct current to the first DC-DC circuit, and the first DC-DC circuit converts the first direct current into the second direct current, and transmits the second direct current to the to-be-charged apparatus. Alternatively, the first direct current transmission circuit transmits the first direct current to the energy storage apparatus, to charge the energy storage apparatus, and complete electricity storage. Alternatively, the first direct current transmission circuit transmits the first direct current to the auxiliary charging module, and the second DC-DC circuit of the auxiliary charging module converts the first direct current into the second direct current, and then transmits the second direct current to the to-be-charged apparatus through a port of the auxiliary charging module.

In an optional implementation, when the value of the first direct current on the high-voltage direct current bus is less than the preset threshold, it indicates that the electric energy provided by the alternating current grid is insufficient to support a charging requirement of the to-be-charged apparatus. In this case, the direct current transmission circuit needs to transmit, to the high-voltage direct current bus, the direct current provided by the photovoltaic power generation apparatus or the energy storage apparatus, to implement electric energy superimposition. Then, a superimposed direct current is transmitted to the first DC-DC circuit, to increase the second direct current output by the first DC-DC circuit.

In an optional implementation, the first direct current transmission circuit may include a common-mode inductor, a control switch, and a fuse. The common-mode inductor, the control switch, and the fuse are connected in series. The common-mode inductor is configured to suppress common-mode interference. The control switch is configured to control the first direct current transmission circuit to be turned on or off. The fuse is configured to protect the direct current transmission circuit. When a current passing through the direct current transmission circuit is excessively large, the fuse is burnt, and the direct current transmission circuit is turned off.

In an optional implementation, the direct current transmission module further includes a current detection circuit. The current detection circuit is configured to: detect the current in the direct current transmission circuit, and monitor the current to protect the direct current transmission circuit.

In an optional implementation, the charging module further includes a control circuit. The control circuit may determine, based on different charging requirements of different to-be-charged apparatuses, second direct currents corresponding to the to-be-charged apparatuses. Then, the value of the first direct current output by the AC-DC circuit is adjusted based on the second direct current, to improve electric energy utilization.

In an optional implementation, both the AC-DC circuit and the first DC-DC circuit in the charging module are bidirectional. In other words, the charging module can not only charge the to-be-charged apparatus, but also supply power to the alternating current grid. In a grid off-peak or photovoltaic power generation application scenario, the control circuit controls working directions of the AC-DC circuit and the first DC-DC circuit, and the first DC-DC circuit transmits, to the high-voltage direct current bus based on a power supply instruction sent by the alternating current grid, a direct current provided by the to-be-charged apparatus. The AC-DC circuit inverts a high-voltage direct current on the high-voltage direct current bus based on the power supply instruction, converts the high-voltage direct current on the high-voltage direct current bus into an alternating current, and then transmits the alternating current to the alternating current grid.

A second aspect of embodiments of this application provides a charging system. The charging system includes:
a transformer, a plurality of charging modules shown in any implementation of the first aspect, and a switch apparatus.

Input ends of the plurality of charging modules are all connected to an alternating current grid by using the transformer. Output ends of the plurality of charging modules are connected to an input end of the switch apparatus, and the plurality of charging modules are connected in parallel by using the switch apparatus.

The transformer is configured to: convert, into a low-voltage alternating current, a high-voltage alternating current provided by the alternating current grid, and transmit the low-voltage alternating current to the input ends of the plurality of charging modules.

An output end of the switch apparatus is connected to a to-be-charged apparatus. The switch apparatus is configured to select at least one of the plurality of charging modules to charge the to-be-charged apparatus.

In an optional implementation, the charging system further includes a photovoltaic power generation apparatus or an energy storage apparatus.

Second ends of first direct current transmission circuits included in the plurality of charging modules are all connected to a system direct current bus, and the photovoltaic power generation apparatus or the energy storage apparatus is connected to the system direct current bus. The plurality of charging modules are connected in parallel to the photovoltaic power generation apparatus or the energy storage apparatus through the system direct current bus.

The photovoltaic power generation apparatus or the energy storage apparatus is configured to provide direct currents for first DC-DC circuits included in the plurality of charging modules.

In an optional implementation, the charging module is further configured to: convert, into alternating currents and/or an alternating current based on a power supply instruction sent by the alternating current grid, a direct current provided by the to-be-charged apparatus, the direct current provided by the photovoltaic power generation apparatus, and/or the direct current provided by the energy storage apparatus, and transmit the alternating currents and/or the alternating current to the alternating current grid.

A third aspect of embodiments of this application provides another charging system. The charging system includes:
a transformer, at least one charging module and at least one auxiliary charging module shown in any implementation of the first aspect, and a switch apparatus.

An input end of the charging module is connected to an alternating current grid by using the transformer. Both output ends of the charging module and the auxiliary charging module are connected to an input end of the switch apparatus, and are connected in parallel by using the switch apparatus.

The transformer is configured to: convert, into a low-voltage alternating current, a high-voltage alternating current provided by the alternating current grid, and transmit the low-voltage alternating current to the input end of the at least one charging module. An output end of the switch apparatus is connected to a to-be-charged apparatus. The switch apparatus is configured to select the at least one charging module or the at least one auxiliary charging module to charge the charging apparatus.

In an optional implementation, a second end of a first direct current transmission circuit included in the charging module is connected in parallel to a second end of a second direct current transmission circuit included in the auxiliary charging module through a system direct current bus.

In an optional implementation, the charging system further includes a photovoltaic power generation apparatus or an energy storage apparatus.

The photovoltaic power generation apparatus or the energy storage apparatus is connected to the system direct current bus.

The photovoltaic power generation apparatus is configured to provide third direct currents for a first DC-DC circuit included in the charging module and a second DC-DC circuit included in the auxiliary charging module. The energy storage apparatus is configured to provide fourth direct currents for the first DC-DC circuit included in the charging module and the second DC-DC circuit included in the auxiliary charging module.

In an optional implementation, the charging module is further configured to: convert, into alternating currents and/or an alternating current based on a power supply instruction sent by the alternating current grid, a direct current provided by the to-be-charged apparatus, the direct current provided by the photovoltaic power generation apparatus, and/or the direct current provided by the energy storage apparatus, and transmit the alternating currents and/or the alternating current to the alternating current grid.

A fourth aspect of embodiments of this application provides a charging method. The charging method includes the following steps.

A charging module may provide a use with plurality of charging manners, for example, a common charging mode or a fast charging mode. When charging a to-be-charged apparatus, the charging module may first receive a charging instruction entered by the user, and then the charging module may determine a power supply manner of the charging module based on the charging instruction. After determining the power supply manner, the charging module then charges the to-be-charged module based on the power supply manner. In the charging method, the charging module may provide more charging options for the user, to meet different charging requirements, and improve an intelligent level of the charging module.

In an optional implementation, if the charging instruction received by the charging module is a common charging instruction, the charging module may determine, based on the common charging instruction, that the power supply manner of the charging module is mains power supply. In this case, the charging module needs to obtain an alternating current provided by an alternating current grid, convert the alternating current into a direct current, and transmit the direct current to the to-be-charged apparatus, to finally charge the to-be-charged apparatus.

In an optional implementation, if the charging instruction received by the charging module is a fast charging instruction, the charging module may determine, based on the fast charging instruction, that the power supply manner of the charging module is superimposition power supply of mains and a photovoltaic power generation apparatus or an energy storage apparatus. In this case, the charging module not only needs to obtain an alternating current provided by an alternating current grid, but also needs to obtain a direct current provided by the photovoltaic power generation apparatus or the energy storage apparatus. The charging module first converts, into a direct current, the alternating current provided by the alternating current grid, then superimposes the direct current and the direct current provided by the photovoltaic power generation apparatus or the energy storage apparatus, finally converts a superimposed direct current into a direct current for charging, and transmits, to the to-be-charged apparatus, the direct current for charging.

A fourth aspect of embodiments of this application provides another charging method, applied to the charging module shown in any embodiment of the first aspect. The charging method includes:
receiving, by a control circuit, a charging instruction entered by a user;
determining, by the control circuit, a power supply manner of the charging module based on the charging instruction;
controlling, by the control circuit, based on the determined power supply manner, the charging module to obtain electric energy, and controlling the charging module to convert the electric energy into a second direct current corresponding to a to-be-charged module; and
controlling, by the control circuit, the charging module to transmit the second direct current to the to-be-charged module.

In an optional implementation, the charging instruction entered by the user is a common charging instruction.

The control circuit determines, based on the common charging instruction, that the power supply manner of the charging module is mains power supply.

The control circuit controls an AC-DC circuit to obtain an alternating current provided by an alternating current grid.

The control circuit controls the AC-DC circuit to convert the alternating current into a first direct current, and input the first direct current to a first DC-DC circuit through a high-voltage direct current bus.

The control circuit controls the first DC-DC circuit to convert the first direct current into a second direct current, and controls the first DC-DC circuit to transmit the second direct current to the to-be-charged module.

In an optional implementation, the charging instruction entered by the user is a fast charging instruction.

The control circuit determines, based on the fast charging instruction, that the power supply manner of the charging module is superimposition power supply of mains and a photovoltaic power generation apparatus or an energy storage apparatus.

The control circuit controls an AC-DC circuit to obtain an alternating current provided by an alternating current grid.

The control circuit controls the AC-DC circuit to convert the alternating current into a first direct current, and transmits the first direct current to a high-voltage direct current bus.

The control circuit controls a first direct current transmission circuit to obtain a direct current sent by the photovoltaic power generation apparatus or the energy storage apparatus, and transmits, to the high-voltage direct current bus, the direct current sent by the photovoltaic power generation apparatus or the energy storage apparatus.

The control circuit controls superimposition of the first direct current and the direct current sent by the photovoltaic power generation apparatus or the energy storage apparatus, and transmits a superimposed direct current to the first DC-DC circuit.

The control circuit controls the first DC-DC circuit to convert the superimposed direct current into a second direct current, and controls the first DC-DC circuit to transmit the second direct current to the to-be-charged module.

### BRIEF DESCRIPTION OF DRAWINGS

FIG. 1 is a system architectural diagram of a charging system according to an embodiment of this application;
FIG. 2 is a schematic diagram of a structure of a charging module according to an embodiment of this application;
FIG. 3 is a schematic diagram of a structure of an auxiliary charging module according to an embodiment of this application;
FIG. 4 is a system architectural diagram of a charging system according to an embodiment of this application;
FIG. 5 is a system architectural diagram of another charging system according to an embodiment of this application;
FIG. 6 is a system architectural diagram of another charging system according to an embodiment of this application;
FIG. 7 is a schematic flowchart of a charging method according to an embodiment of this application; and
FIG. 8 is a schematic flowchart of another charging method according to an embodiment of this application.

### DESCRIPTION OF EMBODIMENTS

Embodiments of this application provide a charging module and a charging system. An integral charging module is designed to improve electric energy conversion efficiency. In addition, when an electric vehicle is being charged, battery energy storage and photovoltaic power generation can be superimposed, thereby improving a charging speed of the electric vehicle.

Technical terms used in embodiments of the present invention are merely used to describe specific embodiments, but are not intended to limit the present invention. In this specification, singular forms "one", "this", and "the" are intended to simultaneously include plural forms unless otherwise clearly specified in the context. Further, the term "including" and/or "comprising" used in this specification refers to presence of features, entirety, steps, operations, elements, and/or components, but does not exclude presence or addition of one or more other features, entirety, steps, operations, elements, and/or components.

A charging station is an important infrastructure for an electric vehicle to supplement electric energy. A charging system provided by the charging station usually integrates functions such as power distribution for alternating current input, charging, power distribution for a direct current, cooling, security protection, and detection and metering. Usually, the electric vehicle is connected to an alternating current grid by using the charging system, to supplement the electric energy. The charging system converts, into a direct current voltage in a specific range for output, a three-phase alternating current provided by the alternating current grid, and the direct current voltage is connected to a battery of the electric vehicle by using a charging gun, to implement charging and energy supplementation.

Hardware device costs and electric energy conversion efficiency have become important indicators for establishing the charging station. From a perspective of operation of the charging station, it is expected that initial investment costs of charging facilities of the charging station are low and operation efficiency is high, to obtain a higher return on investment. In addition, with rapid development of a new energy electric vehicle, to obtain better charging experience, the electric vehicle requires increasingly higher charging power. A high-power charging requirement of the electric vehicle faces a series of problems such as difficulty in obtaining power and great impact on a load of the grid. Therefore, a development trend of the charging station is to use, as charging energy, the alternating current provided by the alternating current grid, and better absorb new energy power generation. For example, the impact of the charging system on the grid is resolved by superimposing a buffer of battery energy storage, and electric energy is supplemented by superimposing photovoltaic power generation. Superimposition of new energy power generation to conventional grid power supply not only increases a charging voltage, but also reduces carbon emissions, stabilizes the grid, and greatly improves charging performance of the charging station.

Before embodiments of this application are described, an AC-DC circuit and a DC-DC circuit are first briefly described. An alternating current (alternating current, AC) may be converted into a direct current (direct current, DC) by using various rectifier circuits. Most rectifier circuits each include a transformer, a main rectifier circuit, a filter, and the like. The main rectifier circuit mainly includes a rectifier diode, and is classified to a half-wave rectifier circuit, a full-wave rectifier circuit, a bridge rectifier circuit, and the like. The DC-DC circuit is a direct current-to-direct current circuit, and is usually a voltage converter that converts an input voltage and effectively outputs a fixed voltage. The voltage converter is classified to a boost converter, a buck converter, and a buck-boost converter. Usually, the DC-DC circuit includes an inductor coil, a diode, a triode, a capacitor, and the like, and outputs a chopper circuit on a circuit class.

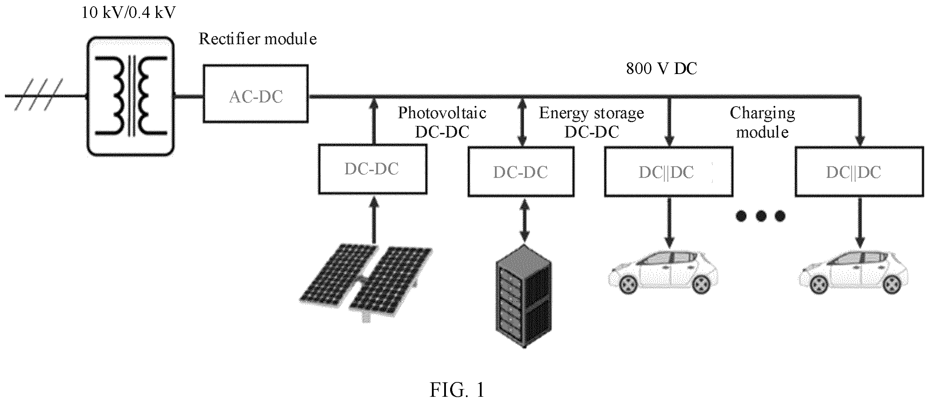

In an existing charging system, to reduce a quantity of levels of a power converter and improve electric energy conversion efficiency, a conventional alternating current bus architecture is converted into a high-voltage direct current bus architecture. FIG. 1 is a system architectural diagram of a charging system according to an embodiment of this application. As shown in FIG. 1, the charging system includes two-level power conversion. The first level is an alternating current-to-direct current (AC-DC) rectifier module that is not isolated from a grid. The second level is a direct current-to-direct current (DC-DC) charging module that is electrically isolated from the grid. The AC-DC module is connected to an alternating current grid, converts three-phase alternating current input into a direct current, completes power factor correction, and then outputs a relatively stable direct current voltage to an internal high-voltage direct current bus. The next-level DC-DC module is electrically isolated from the grid and connected to the internal high-voltage direct current bus. Input of the DC-DC module is output of the AC-DC module on the high-voltage direct current bus, and output of the DC-DC module is 200 V to 1000 V direct current charging. Then, the other end of the DC-DC module is connected to a to-be-charged electric vehicle by using a charging gun, to charge the electric vehicle.

In the foregoing system, the internal high-voltage direct current bus is further connected to a photovoltaic power generation apparatus or an energy storage apparatus, for example, a direct current device such as an energy storage battery or a photovoltaic panel. The photovoltaic power generation apparatus or the energy storage apparatus is connected to the internal high-voltage direct current bus by using the single-level DC-DC module, to implement a low-cost and highly efficient optical storage direct current bus coupling architecture that is easy to be managed and scheduled. When the alternating current grid supplies insufficient power, the photovoltaic panel or the energy storage battery generates power. Power factor correction is performed on the direct current by using the DC-DC module, and a stable direct current is output to the internal high-voltage direct current bus. The direct current is superimposed with a high-voltage direct current output by the AC-DC module and then input to the DC-DC module for charging. In this way, a charging voltage of the electric vehicle is increased and power supply of the alternating current grid is supplemented. When the alternating current grid supplies sufficient power, power conversion may alternatively be performed on a high-voltage direct current on the internal high-voltage direct current bus by using the DC-DC module, to charge the energy storage battery and store electric energy. When the direct current voltage on the internal high-voltage direct current bus is increased, the energy storage battery discharges to supplement electric energy.

The existing charging system can provide a stable direct current charging voltage for the electric vehicle, and a new energy device may be superimposed, to supplement the electric energy. However, in the split architecture, the AC-DC module that implements alternating current-to-direct current conversion and each DC-DC module are independent of each other, and connection components such as an electromagnetic compatibility EMC common-mode inductor filter, a control switch, a fuse, and an electrical connection terminal need to be added between the output of the AC-DC module and the input of the DC-DC module, to ensure independence and compatibility of the modules. However, this causes an excessive large quantity of port elements in the entire charging system, and causes excessively high costs of the charging system. In addition, the port components are located on a main circuit of the charging system. Consequently, electric energy conversion efficiency is reduced. In addition, the components generate a large amount of heat. Consequently, heat dissipation costs of the module are also significantly higher than that of an integral module.

Based on the foregoing problem, embodiments of this application provide a new integral charging module and a charging system constructed based on the charging module. The integral charging module may significantly reduce a quantity of port elements in a system, and can improve electric energy conversion efficiency while reducing costs. In addition, the integral charging module further provides a connection port of an optical storage device, to implement superimposition of battery energy storage or photovoltaic power generation on a direct current bus.

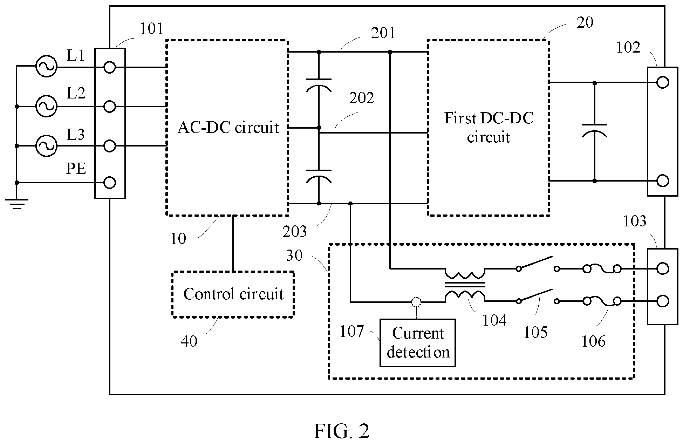

The following first describes the integral charging module. FIG. 2 is a schematic diagram of a structure of a charging module according to an embodiment of this application. As shown in FIG. 2, the charging module is a three-port integral charging module, and includes an AC-DC circuit 10, a DC-DC circuit 20, and a direct current transmission circuit 30.

The AC-DC circuit 10 corresponds to an alternating current input port 101, the first DC-DC circuit 20 corresponds to a charging output port 102, and the first direct current transmission circuit 30 corresponds to a high-voltage direct current input/output port 103. One end of the AC-DC circuit 10 is connected to an alternating current grid through the alternating current input port 101, and the other end is connected to a high-voltage direct current bus. The high-voltage direct current bus includes a bus positive electrode 201, a bus ground terminal 202, and a bus negative electrode 203. The other end of the AC-DC circuit 10 is connected to one end of the first DC-DC circuit 20 through the high-voltage direct current bus, and the other end of the first DC-DC circuit 20 is connected to a to-be-charged apparatus through the charging output port 102. In addition, one end of the first direct current transmission circuit 30 is directly connected to the high-voltage direct current bus, and the other end is connected to another external direct current apparatus through the high-voltage direct current input/output port 103. For example, the other end may be connected to a photovoltaic power generation apparatus. In other words, the high-voltage direct current input/output port 103 may provide a connection port for a new energy power generation device.

For example, the AC-DC circuit 10 may convert, into a first direct current, a three-phase alternating current provided by the alternating current grid, and may further perform power factor correction (PFC) on the first direct current. In this way, the AC-DC circuit 10 may output continuous and stable first direct currents to the high-voltage direct current bus. The first direct current is input to the first DC-DC circuit 20 through the high-voltage direct current bus, and the first DC-DC circuit 20 converts the first direct current into a second direct current (direct current charging voltage) ranging from 150 V to 1000 V, to adapt to charging power of an electric vehicle. Finally, the direct current charging voltage is output to the to-be-charged apparatus (electric vehicle) through the charging output port 102, to complete a charging process.

The first direct current transmission circuit 30 provides the external direct current apparatus with a port connected to the high-voltage direct current bus in the charging module, and may transmit high voltage electricity between the external direct current apparatus and the high-voltage direct current bus. For example, the photovoltaic power generation apparatus or an energy storage apparatus may be connected to the high-voltage direct current bus by using the first direct current transmission circuit 30. For example, a preset threshold may be set first. When a value of the first direct current on the high-voltage direct current bus is greater than the preset threshold, it indicates that the alternating current grid supplies sufficient power. In this case, the charging module may not only charge the to-be-charged apparatus by using the first DC-DC circuit 20, but also charge an energy storage battery by using the first direct current transmission circuit 30, to implement storage of electric energy for backup. When the value of the first direct current on the high-voltage direct current bus is less than the preset threshold, it indicates that the alternating current grid supplies insufficient power. To provide a higher charging voltage for the to-be-charged apparatus, the photovoltaic power generation apparatus or the energy storage apparatus needs to be in a power generation state, and provides a direct current to the high-voltage direct current bus by using the first direct current transmission circuit 30, to implement superimposition of a discharging voltage of the photovoltaic power generation apparatus or the energy storage apparatus and an output voltage of an AC-DC module. In this way, the photovoltaic power generation apparatus or the energy storage apparatus and the alternating current grid jointly charge the to-be-charged apparatus, to ensure charging performance of the to-be-charged apparatus.

In a specific application scenario, the charging module may provide a user with two charging modes: a common charging mode, and a fast charging mode. The user can select different charging modes based on charging requirements. When the user selects the common charging mode, the user sends a normal charging instruction to the charging module. When receiving the common charging instruction, the charging module may turn off the first direct current transmission circuit 30, and charge the electric vehicle by using electric energy provided by the alternating current grid. In this case, the alternating current grid provides the alternating current for the AC-DC circuit 10. The AC-DC circuit 10 converts the alternating current into the first direct current, and transmits the first direct current to the first DC-DC circuit 20 through the high-voltage direct current bus. The first DC-DC circuit 20 then converts the input first direct current into the second direct current, and charges the electric vehicle by using the second direct current. When the user selects the fast charging mode, the user sends a fast charging instruction to the charging module. When receiving the fast charging instruction, the charging module may turn on the first direct current transmission circuit 30. In this case, the photovoltaic power generation apparatus or the energy storage apparatus is in a power generation state. The photovoltaic power generation apparatus may provide a third direct current for the high-voltage direct current bus by using the first direct current transmission circuit 30, or the energy storage apparatus may provide a fourth direct current for the high-voltage direct current bus by using the first direct current transmission circuit 30. Discharging of the photovoltaic power generation apparatus or the energy storage apparatus and the output voltage of the AC-DC module are superimposed on the high-voltage direct current bus, and then a superimposed direct current is transmitted to the first DC-DC circuit 20, to increase the second direct current output by the first DC-DC circuit 20. In this way, the photovoltaic power generation apparatus or the energy storage apparatus and the alternating current grid jointly charge the to-be-charged apparatus, to improve a charging speed of electric energy.

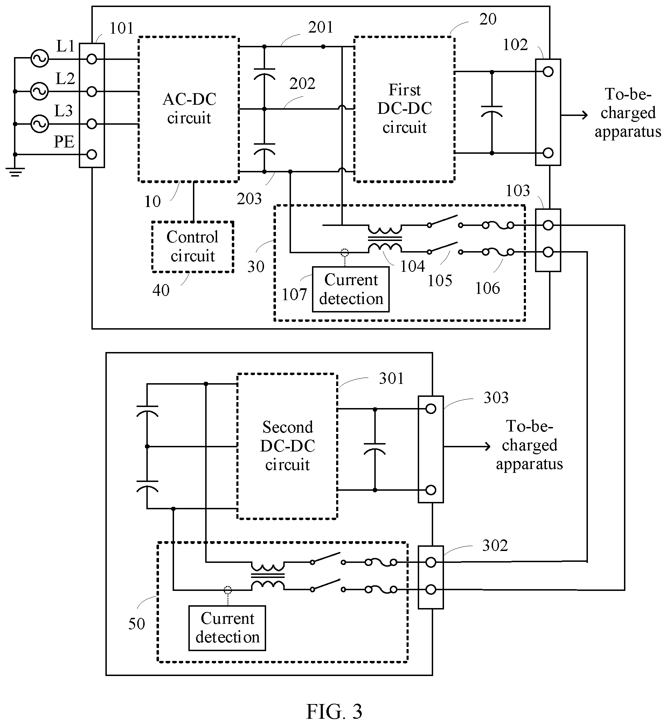

The high-voltage direct current input/output port 103 corresponding to the first direct current transmission circuit 30 may be further connected to another direct current apparatus. For example, the first direct current transmission circuit 30 may be further connected to an auxiliary charging module. FIG. 3 is a schematic diagram of a structure of an auxiliary charging module according to an embodiment of this application. As shown in FIG. 3, compared with the charging module shown in FIG. 2, the auxiliary charging module does not have a previous-level AC-DC circuit, and only reserves a next-level second DC-DC circuit 301 and a second direct current transmission circuit 50. A function of the second DC-DC circuit 301 is similar to that of a first DC-DC circuit 20, and a structure and a function of the second direct current transmission circuit 50 are similar to those of a first direct current transmission circuit 30. Details are not described herein. The auxiliary charging module does not have a capability of converting an alternating current into a direct current, and therefore cannot be connected to an alternating current grid. However, a high-voltage direct current input/output port 302 of the auxiliary charging module may be connected to a high-voltage direct current input/output port 103 of the charging module, so that the second DC-DC circuit 301 and the first DC-DC circuit 20 share an AC-DC circuit 10 in the charging module. In other words, a first direct current on a high-voltage direct current bus in the charging module may alternatively be transmitted to the second direct current transmission circuit 50 by using the first direct current transmission circuit 30, and then transmitted to the second DC-DC circuit 301 by using the second direct current transmission circuit 50. Then, the second DC-DC circuit 301 converts the first direct current into a second direct current, and charges a to-be-charged apparatus through a port 303 of the auxiliary charging module.

When the charging module is connected to the auxiliary transmission module by using the first direct current transmission circuit 30, ports that can be used for charging may be provided as many as possible when the AC-DC circuit 10 is shared. In this way, in a charging system, more to-be-charged apparatuses may be charged simultaneously, thereby increasing a capacity of the charging system while reducing module costs, and improving performance of the charging system.

The first direct current transmission circuit 30 may include an EMC common-inductance inductor 104, a control switch 105, a fuse 106, and the like. The EMC common-inductance inductor 104 is configured to suppress common-mode interference and implement a filtering function. The control switch 105 is configured to control connection and disconnection of an external direct current apparatus. It may be understood that when the control switch 105 is turned on, the first direct current transmission circuit 30 is turned on, and the external direct current apparatus (for example, a photovoltaic power generation apparatus) may be connected to the charging module through the high-voltage direct current input/output port 103. When the control switch 105 is turned off, the direct current transmission circuit 30 is turned off, and the external direct current apparatus cannot be connected to the charging module. During actual application, a status of the control switch may be determined based on a specific charging scenario and a specific requirement. For example, when the control switch 105 is turned on, the charging module may implement parallel connection of a plurality of modules, so that each charging module is connected to a system direct current bus in the charging system, to implement superimposition and coupling of the plurality of modules and the photovoltaic power generation apparatus or an energy storage apparatus. The fuse 106 has a protection function. When a voltage in the direct current transmission circuit 30 is excessively high, the fuse 106 is burnt, and an optical storage apparatus and the high-voltage direct current bus is disconnected, to protect a circuit component.

The first direct current transmission circuit 30 may further include a current detection unit 107, and the current detection unit 107 is configured to monitor a current in the first direct current transmission circuit 30. Once the current in the first direct current transmission circuit 30 is excessively large, a related protection measure may be performed based on a measured current value. For example, the control switch 105 is turned off, to implement circuit protection.

The charging system further includes a control circuit 40. The control circuit 40 is configured to control a working status of the charging module, and the control circuit 40 may adjust a value of a high-voltage direct current on the high-voltage direct current bus based on a direct current charging requirement (a value of the second direct current) of the to-be-charged apparatus. In this way, the DC-DC circuit 20 is at a working point with optimal output efficiency, to improve electric energy conversion efficiency of a charging apparatus. In addition, due to control of the control circuit 40, the second direct current output by the charging module may continuously change, to meet charging requirements of more models of to-be-charged apparatuses.

For example, both the AC-DC circuit 10 and the first DC-DC circuit 20 in the charging module may be bidirectional. In other words, the first DC-DC circuit 20 may not only transmit the high-voltage direct current on the high-voltage direct current bus to the to-be-charged apparatus, but also transmit, to the high-voltage direct current bus through a charging output port 102, electric energy stored in the to-be-charged apparatus. The AC-DC circuit 10 not only has a rectification function, but also has an inversion function. To be specific, the AC-DC circuit 10 may rectify a three-phase alternating current provided by the alternating current grid and output the high-voltage direct current, and may further invert the direct current on the high-voltage direct current bus, convert the direct current into an alternating current, and return the alternating current to the alternating current grid.

In a normal charging scenario, the alternating current grid provides the alternating current for the AC-DC circuit 10, and the AC-DC circuit 10 outputs the first direct current to the high-voltage direct current bus. In addition, the photovoltaic power generation apparatus or the energy storage apparatus may further output a direct current to the high-voltage direct current bus by using the direct current transmission circuit 30. Different direct currents are coupled and superimposed on the high-voltage direct current bus, and are transmitted to the first DC-DC circuit 20 through the high-voltage direct current bus. In this case, the first DC-DC circuit 20 converts a coupled and superimposed direct current into the second direct current required by the to-be-charged apparatus, and transmits the second direct current to the to-be-charged apparatus through the charging output port 102, to implement a charging process.

However, in a grid off-peak or photovoltaic power generation application scenario, the control circuit 40 may change working directions of the AC-DC circuit 10 and the first DC-DC circuit 20 based on a power supply instruction sent by the alternating current grid. In this case, the external to-be-charged apparatus generates power through the charging output port 102, to provide a direct current for the high-voltage direct current bus. The photovoltaic power generation apparatus or the energy storage apparatus is also in a power generation state, and outputs the direct current to the high-voltage direct current bus by using the direct current transmission circuit 30. The direct currents provided by the external to-be-charged apparatus and the optical storage apparatus are coupled and superimposed on the high-voltage direct current bus, and are input to the AC-DC circuit 10. In this case, the AC-DC circuit 10 inverts the direct current, converts the direct current into an alternating current, and feeds the alternating current to the alternating current grid through the alternating current input port 101, to implement a vehicle-to-grid (vehicle-to-grid, V2G) function. In this implementation, a direct current device such as an energy storage battery, a photovoltaic panel, or an electric vehicle may interact with the alternating current grid by using the charging module. This is conducive to development of a charging infrastructure and evolution of a charging technology.

The integral charging module provided in this embodiment of this application provides three ports to implement connections between the alternating current grid, the to-be-charged apparatus, and another external direct current apparatus. The included AC-DC circuit and the included DC-DC circuit are directly connected through the high-voltage direct current bus. This greatly reduces a quantity of port components required in a split architecture, reduces a loss of the port components while reducing module costs, reduces heat generated by the components, and greatly improves electric energy conversion efficiency. In addition, the photovoltaic power generation apparatus or the energy storage apparatus may directly perform direct current transmission with the high-voltage direct current bus through the high-voltage direct current input/output port 103, so that a supplementary direct current can be provided for the DC-DC circuit when the alternating current grid supplies insufficient power, and superimposition of battery energy storage and photovoltaic power generation can be implemented, thereby increasing a charging voltage and improving a charging speed of the charging module.

Based on the foregoing charging module, embodiments of this application further provide several charging systems constructed by using the foregoing charging module. The following describes the charging systems one by one.

### System 1

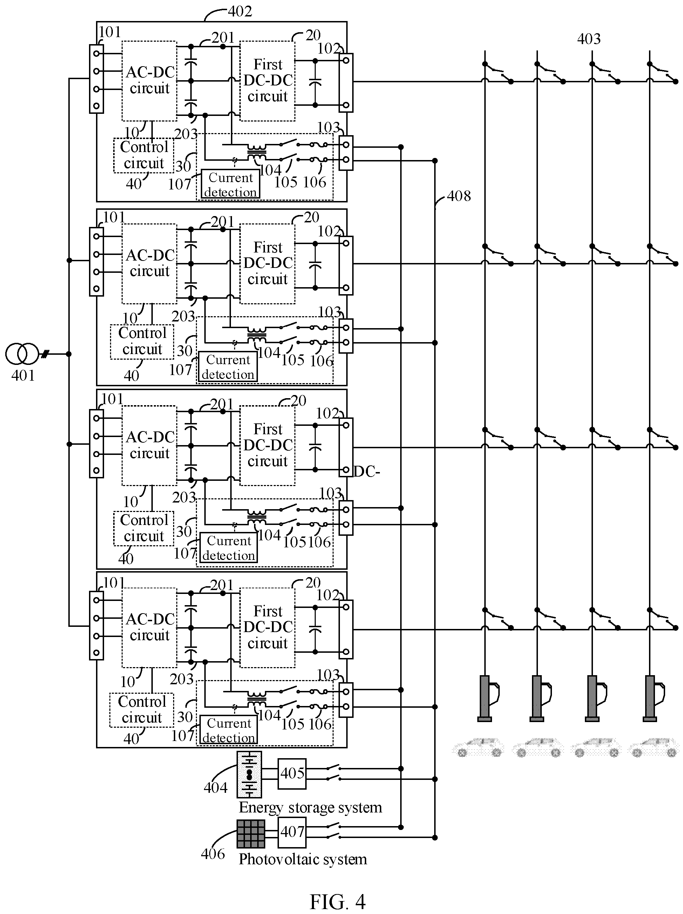

FIG. 4 is a system architectural diagram of a charging system according to an embodiment of this application. As shown in FIG. 4, the charging system includes a transformer 401, a plurality of charging modules 402 that are connected in parallel, and a switch apparatus 403. An alternating current grid is connected to an alternating current input port 101 of each charging module 402 by using the transformer 401. The switch apparatus 403 may be a power distribution matrix switch. A charging output port 102 of each charging module is connected to one end of the power distribution matrix switch, and a parallel connection between the plurality of charging modules is implemented by using the power distribution matrix switch.

The transformer 401 is configured to: convert, into a low-voltage alternating current, a high-voltage alternating current provided by the alternating current grid, and provide the low-voltage alternating current for each charging module 402. For example, the transformer may reduce a three-phase alternating current of 10 kV provided by the alternating current grid to a low-voltage three-phase alternating current of 0.4 kV (380 V), and input the low-voltage three-phase alternating current to each three-port integral charging module 402. Usually, to implement long-distance transmission of electric energy, the alternating current grid directly provides an extremely large voltage of the alternating current, and the transformer performs voltage reduction on the alternating current, to meet a working voltage requirement of the charging module and protect security of the charging system.

A structure and a function of the charging module 402 are consistent with those of the charging module in the embodiment shown in FIG. 2. For details, refer to the content of the foregoing embodiment, and details are not described herein. Specifically, a low-voltage alternating current that is voltage-reduced by the transformer 401 is input to an AC-DC circuit 10 in the charging module through the alternating current input port 101 of the charging module. The AC-DC circuit 10 converts a three-phase alternating current voltage into a high-voltage direct current voltage, implements power factor correction of alternating current input, transmits a stable high-voltage direct current voltage to an internal high-voltage direct current bus, and transmits the stable high-voltage direct current voltage to a first DC-DC circuit 20 through the high-voltage direct current bus. The stable high-voltage direct current voltage is converted by the first DC-DC circuit 20 into a direct current charging voltage, usually ranging from 150 V to 1000 V, required by a to-be-charged apparatus.

Output ports (charging output ports 102) of the plurality of charging modules 402 are connected to the power distribution matrix switch, so that the charging output port 102 of each module can be connected in parallel to any to-be-charged terminal by using the power distribution matrix switch. In this way, one or more charging modules may be selected to charge the to-be-charged apparatus by controlling on-states of a plurality of switches in the power distribution matrix switch. When a plurality of charging modules 402 are selected, the plurality of charging modules 402 simultaneously supply power to the to-be-charged apparatus, to implement fast charging with a high-power direct current and improve a charging speed of the to-be-charged apparatus. As shown in FIG. 4, the power distribution matrix switch in the charging system includes switches in four rows and four columns. When the switch in the first row and the first column and the switch in the first row and the second column are turned on, and other switches are turned off, a 1^{st} charging module and a 2^{nd} charging module simultaneously charge a to-be-charged apparatus connected to a 1^{st} charging gun, to improve a charging speed of the to-be-charged apparatus.

It may be understood that the charging system may further include an energy storage system and a photovoltaic power generation system, to provide supplementary electric energy for the charging system. The energy storage system includes an energy storage battery 404 and a bidirectional direct current converter 405 (DC-DC converter), and the photovoltaic power generation system includes a photovoltaic panel 406 that can generate power and an MPPT DC-DC converter 407. A high-voltage direct current input/output port 103 of each charging module 402 is connected to a system direct current bus 408, so that high-voltage direct current buss in the charging modules are connected in parallel. Then, the energy storage battery 404 is connected to the system direct current bus by using the direct current converter 405, and the photovoltaic panel 406 is also connected to the system direct current bus by using the MPPT DC-DC converter 407, so that the plurality of charging modules 402, the energy storage battery 404, and the photovoltaic panel 406 are connected in parallel.

When a voltage provided by the alternating current grid is sufficient, in other words, a voltage on the high-voltage direct current bus in the charging module 402 is higher than a preset threshold, the charging module may transmit a first direct current on the high-voltage direct current bus to the system direct current bus 408, and transmit the first direct current to the direct current converter 405 through the system direct current bus 408. The direct current converter 405 may convert the first direct current into a charging voltage required by the energy storage battery, and then charge the energy storage battery by using the charging voltage, to store electric energy.

When the alternating current grid supplies insufficient power, the energy storage battery 404 and the photovoltaic panel 406 each serve as a direct current power generation apparatus to supply power to each charging module 402. In this case, power factor correction needs to be performed by using the direct current converter 405 on a fourth direct current sent by the energy storage battery 404, and power factor correction also needs to be performed on power generation of the photovoltaic panel 406 by using the MPPT DC-DC converter 407, to provide a stable direct current voltage to the system direct current bus 408. Then, the stable direct current voltage is transmitted and sent to the high-voltage direct current bus in each charging module 402 through the system direct current bus 408, to provide a direct current for the first DC-DC circuit 20 included in each charging module 402.

For example, when a power supply capacity of the transformer does not meet a power requirement of the charging system, energy storage may be superimposed to meet a power supply requirement. For example, a maximum charging power requirement of the system is 480 kW, but a maximum remaining power capacity of the transformer is only 320 kW, and the lacked 160 kW may be supplemented by superimposing the energy storage battery 404 or the photovoltaic panel 406. In this scenario, it is assumed that power of a single charging module 402 is 60 kW, and power of an internal AC-DC circuit and power of an internal DC-DC circuit are equal, that is, both are 60 kW. In this case, eight charging modules 402 need to be configured. After the energy storage battery 404 and the photovoltaic panel 406 are superimposed, maximum output power of the AC-DC circuit 10 in each charging module 402 may be set to not exceed 40 kW, so that overload of a front-end transformer can be avoided. Insufficient electric energy may be transmitted by the energy storage battery 404 and the photovoltaic panel 406 to the first DC-DC circuit 20 through the system direct current bus. In this design, output power of the AC-DC circuit 10 is designed to be smaller than output power of the next-level first DC-DC circuit 20, so that costs of the AC-DC circuit 10 can further be reduced.

Particularly, the AC-DC circuit 10 and the first DC-DC circuit 20 that are included in the charging module 402 in the charging system may alternatively support bidirectional power conversion. To be specific, in a normal charging scenario, the AC-DC circuit 10 rectifies, into the first direct current, the alternating current provided by the alternating current grid, and uses the first direct current as input of the next-level first DC-DC circuit 20. The first DC-DC circuit 20 supplements electric energy for the to-be-charged apparatus. In a grid off-peak or photovoltaic power generation application scenario, both the AC-DC circuit 10 and the first DC-DC circuit 20 in each charging module 402 may change working directions based on a power supply instruction sent by the alternating current grid. The energy storage battery 404 and the photovoltaic panel 406 may transmit energy to the high-voltage direct current bus of each charging module 402 through the system direct current bus 408. The high-voltage direct current bus then transmits the energy to the AC-DC circuit 10, and the AC-DC circuit 10 inverts the energy, converts the energy into alternating current energy, and transmits the alternating current energy to the grid. Similarly, the to-be-charged apparatus (an electric vehicle) may alternatively feed, to the alternating current grid by using the first DC-DC circuit 20 of the charging module, energy that is stored in a battery pack of the to-be-charged apparatus and that is inverted by using the high-voltage direct current bus and the AC-DC circuit 10, to implement a V2G function.

### System 2

Based on the foregoing descriptions of the charging system, to further reduce construction costs of the charging system, charging positions (charging piles) are provided as many as possible in a case of a limited quantity of charging modules, to meet a requirement of simultaneously charging more to-be-charged apparatuses. An auxiliary charging module may be further introduced into the charging system.

Compared with the charging module, the auxiliary charging module is a single-level low-cost auxiliary charging module in which a structure of a previous-level AC-DC circuit is deleted and a next-level DC-DC circuit and a direct current transmission circuit are reserved. That is, the auxiliary charging module is a two-port structure, and includes a charging output port and a high-voltage direct current input/output port. In the auxiliary charging module, a feature and a parameter of a DC-DC module are completely the same as those of the next-level DC-DC module in the charging module, and details are not described herein.

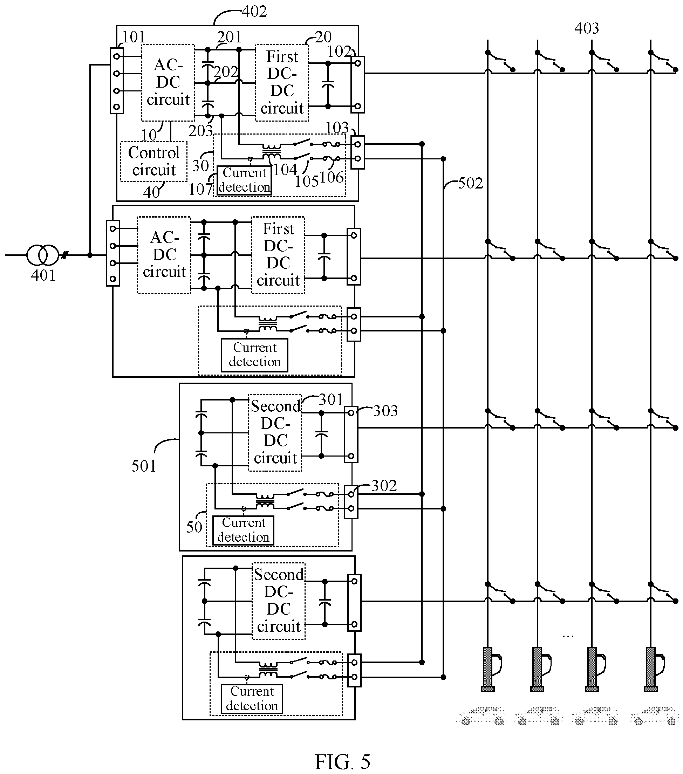

FIG. 5 is a system architectural diagram of another charging system according to an embodiment of this application. As shown in FIG. 5, the charging system includes a transformer 401, at least one charging module 402, at least one auxiliary charging module 501, and a switch apparatus 403. The transformer 401, the charging module 402, and the switch apparatus 403 are similar to the apparatuses in the embodiment shown in FIG. 4, and details are not described herein.

The transformer 401 is still connected to an alternating current grid and an input end of the charging module 402. The transformer 401 provides a low-voltage alternating current for each charging module 402. The charging module 402 inputs the low-voltage alternating current to an AC-DC circuit 10 in the charging module through an alternating current input port 101 of the charging module 402. The AC-DC circuit 10 converts a three-phase alternating current voltage into a first direct current, implements power factor correction of alternating current input, transmits a stable first direct current to an internal high-voltage direct current bus, and transmits the stable first direct current to a next-level first DC-DC circuit 20 through the high-voltage direct current bus. The stable first direct current is converted by the first DC-DC circuit 20 into a second direct current, usually ranging from 150 V to 1000 V, required by a to-be-charged apparatus.

Output ports (charging output ports 102) of a plurality of charging modules 402 and an output port (a charging output port 303) of the auxiliary charging module are connected to a power distribution matrix switch (the switch apparatus 403), so that the charging module 402 is connected in parallel to the auxiliary charging module 501. In this way, the charging module 402 and/or the auxiliary charging module 501 may be selected to charge the to-be-charged apparatus by controlling on-states of a plurality of switches in the power distribution matrix switch.

When a photovoltaic power generation apparatus or an energy storage apparatus is not superimposed, both a high-voltage direct current input/output port 103 of each charging module 402 and a high-voltage direct current input/output port 302 of the auxiliary charging module are connected to a system direct current bus 504, so that the charging module 402 is connected in parallel to the auxiliary charging module 501. In this way, each auxiliary charging module 501 may share the previous-level AC-DC circuit 10 of the charging module 402 through the system direct current bus 502. Because there is a low probability that all charging terminals are simultaneously charged with high power, the charging module 402 may be fully used in this configuration manner. The auxiliary charging module 501 may configure more charging positions for the charging system, and more charging terminals may be accommodated. Therefore, the introduction of the auxiliary charging module 501 may improve utilization of the charging system while reducing module costs. For example, a capacity provided by the transformer 401 is 240 kW, and power of each charging module 402 is 60 kW. In this way, four three-port charging modules 402 may be disposed in the charging system. Then, power sharing is performed through the system direct current bus 502, and four additional auxiliary charging modules 501 may be added. In this way, the system may simultaneously charge eight terminals. During charging, each terminal can be provided with average power of 30 kW, and each terminal may be provided with maximum charging power of 240 kW. The charging system may provide differentiated services for vehicles with various charging power requirements, to improve utilization efficiency of the charging system.

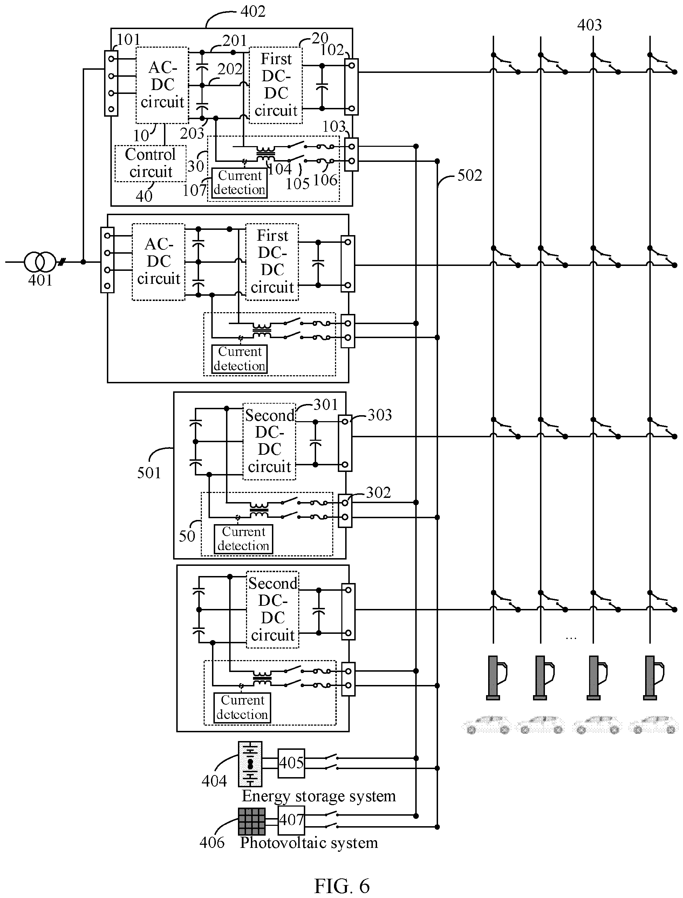

It may be understood that the charging system may further include an energy storage system and a photovoltaic power generation system, to provide supplementary electric energy for the entire charging system. FIG. 6 is a system architectural diagram of a charging system including an energy storage system and a photovoltaic power generation system. As shown in FIG. 6, the energy storage system includes an energy storage battery 404 and a bidirectional direct current converter 405 (DC-DC converter), and the photovoltaic power generation system includes a photovoltaic panel 406 that can generate power and an MPPT DC-DC converter 407. Both a high-voltage direct current input/output port 103 of each charging module 402 and a high-voltage direct current input/output port 303 of an auxiliary charging module 501 are connected to a system direct current bus 502, so that the charging module 402 is connected in parallel to the auxiliary charging module 501. Then, the energy storage battery 404 is connected to the system direct current bus 502 by using the direct current converter 405, and the photovoltaic panel 406 is also connected to the system direct current bus 502 by using the MPPT DC-DC converter 407, so that a plurality of charging modules 402, the auxiliary charging module 501, the energy storage battery 404, and the photovoltaic panel 406 are connected in parallel.

Similarly, when a voltage provided by an alternating current grid is sufficient, in other words, a voltage on a high-voltage direct current bus in the charging module 402 is higher than a preset threshold, the charging module 402 may transmit a high-voltage direct current on the high-voltage direct current bus to the system direct current bus 502, and transmit the high-voltage direct current to the direct current converter 405 through the system direct current bus 502. The direct current converter 405 may convert the high-voltage direct current into a charging voltage required by the energy storage battery 401, and then charge the energy storage battery 404 by using the charging voltage, to store electric energy.

When the alternating current grid supplies insufficient power, the energy storage battery 404 and the photovoltaic panel 406 each serve as a direct current power generation apparatus to supply power to each charging module 402 and the auxiliary charging module 501. In this case, power factor correction needs to be performed by using the direct current converter 405 on a fourth direct current sent by the energy storage battery 404, and power factor correction also needs to be performed on power generation of the photovoltaic panel 406 by using the MPPT DC-DC converter 407, to provide a stable direct current voltage to the system direct current bus 502. Then, the stable direct current voltage is transmitted and sent to DC-DC circuits in each charging module 402 and each auxiliary charging module 501 through the system direct current bus 502, to provide a direct current to the DC-DC circuits included in the charging module 402 and the auxiliary charging module 501.

For example, in the charging system, when the alternating current grid supplies insufficient power, the charging module 402 may be configured based on a capacity that can be supported by the transformer 401, and the insufficient part is supplemented by superimposing the auxiliary charging module 501, the energy storage battery 404, and the photovoltaic panel 406. For example, a maximum charging power requirement of the system is 480 kW, but a maximum remaining power capacity of the transformer 401 is only 300 kW, and the lacked 180 kW needs to be supplemented by using the auxiliary charging module 501. For example, it is assumed that power of an AC-DC circuit 10 and power of a first DC-DC circuit 20 in the charging module 402 are equal, and both are 60 kW, and power of the auxiliary charging module 501 is also 60 kW. In this case, five charging modules 402 may be configured based on a grid capacity, and the lacked 180 kW charging power is supplemented by superimposing the energy storage battery 404 and three auxiliary charging modules 501. In this way, a problem of insufficient grid capacity can be resolved.

The foregoing charging system is constructed by using a three-port integral charging module and an auxiliary charging module with a simpler structure, so that more to-be-charged apparatuses can be accommodated while module costs are further reduced. In this way, charging efficiency of the entire charging system is improved. In addition, by connecting to an optical storage device, new energy may be used to provide electric energy for the charging system, thereby implementing usage of clean energy and reducing carbon emissions.

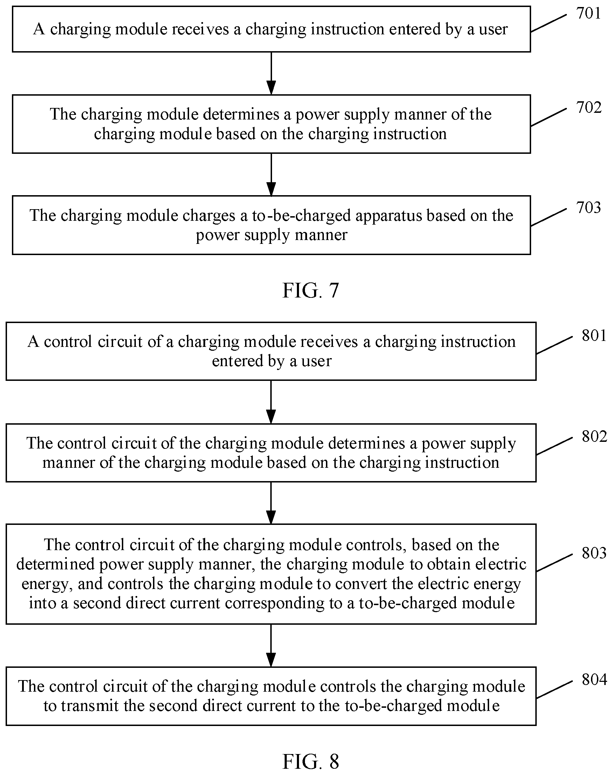

Based on the foregoing descriptions of the charging module and the charging system, embodiments of this application further provide a charging method. FIG. 7 is a schematic flowchart of a charging method according to an embodiment of this application. The method includes the following steps.

701: A charging module receives a charging instruction entered by a user.

The charging module may provide different charging modes for the user, to meet different charging requirements. The charging module is the charging module in the embodiment shown in FIG. 2, and details are not described herein. When the user charges an electric vehicle by using the charging module, the user may first output the charging instruction based on the charging requirement. Optionally, the charging instruction may include a common charging instruction and a fast charging instruction. The common charging instruction requires the charging module to provide a common charging service for the electric vehicle, and the fast charging instruction requires the charging module to provide a fast charging service for the electric vehicle. Compared with the common charging service, the fast charging service needs to provide a higher direct current charging voltage for the electric vehicle.

702: The charging module determines a power supply manner of the charging module based on the charging instruction.

After the charging instruction is obtained, a working process of the charging module needs to be adjusted based on the charging instruction. For the first time, when the electric vehicle is not charged, a direct current transmission circuit of the charging module may transmit a high-voltage direct current on a high-voltage transmission bus to an energy storage apparatus, to store energy. When the charging instruction is received, if the charging instruction is the common charging instruction, a control circuit of the charging module may control the direct current transmission circuit to be turned off. In this case, a photovoltaic power generation apparatus or the energy storage apparatus is disconnected from the high-voltage direct current bus, and an alternating current grid provides charging electric energy for the electric vehicle. If the received charging instruction is the fast charging instruction, a direct current charging voltage needs to be increased. In this case, a control circuit may control an electric energy transmission direction of the direct current transmission circuit, and obtain a direct current from a photovoltaic power generation apparatus or the energy storage apparatus. The photovoltaic power generation apparatus or the energy storage apparatus is in a discharging state. In addition, the obtained direct current is transmitted to the internal high-voltage direct current bus, to complete coupling and superimposition of the direct current. In this case, it is equivalent to that the alternating current grid, the photovoltaic power generation apparatus, and the energy storage apparatus jointly provide charging electric energy for the electric vehicle. In this way, an output voltage of a DC-DC circuit can be quickly increased, thereby implementing fast charging.

703: The charging module charges a to-be-charged apparatus based on the power supply manner.

In the foregoing charging method, the charging module may determine different charging manners based on a selection of the user, and implement changes of different direct current charging voltages by changing the electric energy transmission direction of the direct current transmission circuit in the charging module, to adapt to more charging requirements.

FIG. 8 is a schematic flowchart of another charging method according to an embodiment of this application. The charging method is applied to the charging module shown in the foregoing embodiments. The charging method includes the following steps.

801: A control circuit of the charging module receives a charging instruction entered by a user.

802: The control circuit of the charging module determines a power supply manner of the charging module based on the charging instruction.

803: The control circuit of the charging module controls, based on the determined power supply manner, the charging module to obtain electric energy, and controls the charging module to convert the electric energy into a second direct current corresponding to a to-be-charged module.

804: The control circuit of the charging module controls the charging module to transmit the second direct current to the to-be-charged module.

In an optional implementation, the charging instruction entered by the user is a common charging instruction. The control circuit determines, based on the common charging instruction, that the power supply manner of the charging module is mains power supply. The control circuit controls an AC-DC circuit to obtain an alternating current provided by an alternating current grid. The control circuit controls the AC-DC circuit to convert the alternating current into a first direct current, and input the first direct current to a first DC-DC circuit through a high-voltage direct current bus. The control circuit controls the first DC-DC circuit to convert the first direct current into a second direct current, and controls the first DC-DC circuit to transmit the second direct current to the to-be-charged module.

In an optional implementation, the charging instruction entered by the user is a fast charging instruction. The control circuit determines, based on the fast charging instruction, that the power supply manner of the charging module is superimposition power supply of mains and a photovoltaic power generation apparatus or an energy storage apparatus. The control circuit controls an AC-DC circuit to obtain an alternating current provided by the alternating current grid. The control circuit controls the AC-DC circuit to convert the alternating current into a first direct current, and transmits the first direct current to a high-voltage direct current bus. The control circuit controls a first direct current transmission circuit to obtain a direct current sent by the photovoltaic power generation apparatus or the energy storage apparatus, and transmits, to the high-voltage direct current bus, the direct current sent by the photovoltaic power generation apparatus or the energy storage apparatus. The control circuit controls superimposition of the first direct current and the direct current sent by the photovoltaic power generation apparatus or the energy storage apparatus, and transmits a superimposed direct current to the first DC-DC circuit. The control circuit controls the first DC-DC circuit to convert the superimposed direct current into the second direct current, and controls the first DC-DC circuit to transmit the second direct current to the to-be-charged module.

In the appended claims, the corresponding structures, materials, actions, and equivalent forms (if any) of all apparatuses or steps and functional elements are intended to include any structure, material, or action that is used to perform the function with reference to other explicitly required elements. The descriptions of the present invention are given for the purposes of embodiments and the descriptions, but are not intended to be exhaustive or limit the present invention to the disclosed form.

## Claims

1. A charging module, wherein the charging module comprises an AC-DC circuit, a first DC-DC circuit, and a first direct current transmission circuit, wherein
a first end of the AC-DC circuit is connected to an alternating current grid, a second end of the AC-DC circuit is connected to a first end of the first DC-DC circuit through a high-voltage direct current bus, a second end of the first DC-DC circuit is connected to a to-be-charged apparatus, a first end of the first direct current transmission circuit is connected to the high-voltage direct current bus, a second end of the first direct current transmission circuit is configured to connect to an external direct current apparatus, the first end of the AC-DC circuit is an input end of the charging module, and the second end of the first DC-DC circuit is an output end of the charging module;
the AC-DC circuit is configured to: convert, into a first direct current, an alternating current provided by the alternating current grid, and transmit the first direct current to the first DC-DC circuit or the first direct current transmission circuit through the high-voltage direct current bus;
the first DC-DC circuit is configured to: convert a high-voltage direct current on the high-voltage direct current bus into a second direct current, and transmit the second direct current to the to-be-charged apparatus by using the output end of the charging module, wherein the high-voltage direct current comprises the first direct current; and
the first direct current transmission circuit is configured to transmit a direct current between the high-voltage direct current bus and the external direct current apparatus.

2. The charging module according to claim 1, wherein the external direct current apparatus is a photovoltaic power generation apparatus; and
the first direct current transmission circuit is specifically configured to transmit, to the high-voltage direct current bus, a third direct current provided by the photovoltaic power generation apparatus.

3. The charging module according to claim 1, wherein the external direct current apparatus is an energy storage apparatus; and
the first direct current transmission circuit is specifically configured to: transmit the first direct current on the high-voltage direct current bus to the energy storage apparatus; or
transmit, to the high-voltage direct current bus, a fourth direct current provided by the energy storage apparatus.

4. The charging module according to claim 1, wherein the external direct current apparatus is an auxiliary charging module; and
the auxiliary charging module comprises a second DC-DC circuit and a second direct current transmission circuit, wherein
a first end of the second DC-DC circuit is connected to a first end of the second direct current transmission circuit, a second end of the second DC-DC circuit is connected to the to-be-charged apparatus, the charging module is connected to the auxiliary charging module by using a second end of the second direct current transmission circuit, and the second end of the second DC-DC circuit is an output end of the auxiliary charging module;
the first direct current transmission circuit is specifically configured to transmit the first direct current to the second direct current transmission circuit; and
the second DC-DC circuit is configured to: convert the first direct current into the second direct current, and transmit the second direct current to the to-be-charged apparatus by using the second end of the second DC-DC circuit.

5. The charging module according to claim 4, wherein
the second end of the second direct current transmission circuit is further configured to connect to a photovoltaic power generation apparatus or an energy storage apparatus; and
the second direct current transmission circuit is further configured to: transmit, to the second DC-DC circuit, a third direct current provided by the photovoltaic power generation apparatus; or transmit, to the second DC-DC circuit, a fourth direct current provided by the energy storage apparatus.

6. The charging module according to any one of claims 2 to 5, wherein when a value of the first direct current on the high-voltage direct current bus is greater than a preset threshold,
the first direct current is transmitted to the first DC-DC circuit through the high-voltage direct current bus;
the first direct current is transmitted to the energy storage apparatus by using the first direct current transmission circuit; or
the first direct current is transmitted to the auxiliary charging module by using the first direct current transmission circuit.

7. The charging module according to claim 6, wherein when the value of the first direct current on the high-voltage direct current bus is less than the preset threshold,
the first direct current transmission circuit transmits, to the high-voltage direct current bus, the third direct current provided by the photovoltaic power generation apparatus or the fourth direct current provided by the energy storage apparatus.

8. The charging module according to any one of claims 1 to 7, wherein the first direct current transmission circuit comprises a common-mode inductor, a control switch, and a fuse, wherein
the common-mode inductor, the control switch, and the fuse are connected in series;
the common-mode inductor is configured to suppress common-mode interference;
the control switch is configured to control a connection status between the charging module and the photovoltaic power generation apparatus or the energy storage apparatus; and
the fuse is configured to protect the first direct current transmission circuit.

9. The charging module according to claim 8, wherein the first direct current transmission circuit further comprises a current detection circuit, and the current detection circuit is configured to detect a current in the first direct current transmission circuit.

10. The charging module according to any one of claims 1 to 9, wherein the charging module further comprises a control circuit, and the control circuit is configured to control, based on the second direct current, the value of the first direct current output by the AC-DC circuit.

11. The charging module according to any one of claims 1 to 6, wherein a control circuit is further configured to control working statuses of the AC-DC circuit and the first DC-DC circuit based on a power supply instruction sent by the alternating current grid;
the first DC-DC circuit is further configured to transmit, to the high-voltage direct current bus based on the power supply instruction, a direct current provided by the to-be-charged apparatus; and
the AC-DC circuit is further configured to: invert the direct current on the high-voltage direct current bus based on the power supply instruction, convert the direct current on the high-voltage direct current bus into an alternating current, and transmit the alternating current to the alternating current grid.

12. A charging system, wherein the charging system comprises a transformer, a plurality of charging modules according to any one of claims 1 to 11, and a switch apparatus, wherein
input ends of the plurality of charging modules are all connected to an alternating current grid by using the transformer, output ends of the plurality of charging modules are connected to an input end of the switch apparatus, and the plurality of charging modules are connected in parallel by using the switch apparatus;
the transformer is configured to: convert, into a low-voltage alternating current, a high-voltage alternating current provided by the alternating current grid, and transmit the low-voltage alternating current to the input ends of the plurality of charging modules; and
an output end of the switch apparatus is connected to a to-be-charged apparatus, and the switch apparatus is configured to select at least one of the plurality of charging modules to charge the to-be-charged apparatus.

13. The charging system according to claim 12, wherein the charging system further comprises a photovoltaic power generation apparatus or an energy storage apparatus, wherein
second ends of first direct current transmission circuits comprised in the plurality of charging modules are all connected to a first system direct current bus, the photovoltaic power generation apparatus or the energy storage apparatus is connected to the first system direct current bus, and the plurality of charging modules are connected in parallel to the photovoltaic power generation apparatus or the energy storage apparatus through the first system direct current bus;
the photovoltaic power generation apparatus is configured to provide third direct currents for first DC-DC circuits comprised in the plurality of charging modules; and the energy storage apparatus is configured to provide fourth direct currents for the first DC-DC circuits comprised in the plurality of charging modules.

14. The charging system according to claim 12 or 13, wherein
the charging module is further configured to: convert, into alternating currents and/or an alternating current based on a power supply instruction sent by the alternating current grid, a direct current provided by the to-be-charged apparatus, the direct current provided by the photovoltaic power generation apparatus, and/or the direct current provided by the energy storage apparatus, and transmit the alternating currents and/or the alternating current to the alternating current grid.

15. A charging system, wherein the charging system comprises a transformer, at least one charging module according to any one of claims 1 to 11, at least one auxiliary charging module according to any one of claims 1 to 11, and a switch apparatus, wherein
an input end of the charging module is connected to an alternating current grid by using the transformer;
both output ends of the charging module and the auxiliary charging module are connected to an input end of the switch apparatus, and are connected in parallel by using the switch apparatus;
the transformer is configured to: convert, into a low-voltage alternating current, a high-voltage alternating current provided by the alternating current grid, and transmit the low-voltage alternating current to the input end of the at least one charging module; and
an output end of the switch apparatus is connected to a to-be-charged apparatus, and the switch apparatus is configured to select the at least one charging module or the at least one auxiliary charging module to charge the charging apparatus.

16. The charging system according to claim 15, wherein a second end of a first direct current transmission circuit comprised in the charging module is connected in parallel to a second end of a second direct current transmission circuit comprised in the auxiliary charging module through a second system direct current bus.

17. The charging system according to claim 16, wherein the charging system further comprises a photovoltaic power generation apparatus or an energy storage apparatus, wherein
the photovoltaic power generation apparatus or the energy storage apparatus is connected to the second system direct current bus;
the photovoltaic power generation apparatus is configured to provide third direct currents for a first DC-DC circuit comprised in the charging module and a second DC-DC circuit comprised in the auxiliary charging module; and the energy storage apparatus is configured to provide fourth direct currents for the first DC-DC circuit comprised in the charging module and the second DC-DC circuit comprised in the auxiliary charging module.

18. The charging system according to any one of claims 15 to 17, wherein
the charging module is further configured to: convert, into alternating currents and/or an alternating current based on a power supply instruction sent by the alternating current grid, a direct current provided by the to-be-charged apparatus, the direct current provided by the photovoltaic power generation apparatus, and/or the direct current provided by the energy storage apparatus, and transmit the alternating currents and/or the alternating current to the alternating current grid.

19. A charging method, wherein the charging method comprises:
receiving, by a charging module, a charging instruction entered by a user;
determining, by the charging module, a power supply manner of the charging module based on the charging instruction; and
charging, by the charging module, a to-be-charged apparatus based on the power supply manner.

20. The charging method according to claim 19, wherein the charging instruction is a common charging instruction; the determining, by the charging module, a power supply manner of the charging module based on the charging instruction comprises:
determining, by the charging module based on the common charging instruction, that the power supply manner of the charging module is mains power supply; and
the charging, by the charging module, a to-be-charged apparatus based on the power supply manner comprises:
obtaining, by the charging module based on a determining result, an alternating current provided by an alternating current grid; and
converting, by the charging module, the alternating current into a direct current, and transmitting the direct current to the to-be-charged apparatus.

21. The charging method according to claim 19, wherein the charging instruction is a fast charging instruction; the determining, by the charging module, a power supply manner of the charging module based on the charging instruction comprises:
determining, by the charging module based on the fast charging instruction, that the power supply manner of the charging module is superimposition power supply of mains and a photovoltaic power generation apparatus or an energy storage apparatus; and
the charging, by the charging module, a to-be-charged apparatus based on the power supply manner comprises:
obtaining, by the charging module based on a determining result, an alternating current provided by an alternating current grid and a first direct current provided by the photovoltaic power generation apparatus or the energy storage apparatus;
converting, by the charging module into a second direct current, the alternating current provided by the alternating current grid; and
determining, by the charging module based on the first direct current and the second direct current, a direct current for charging, and transmitting, to the to-be-charged apparatus, the direct current for charging.
